# EUROPÄISCHE PATENTSCHRIFT

(11) **EP 3 055 095 B1**
(45) Veröffentlichungstag und Bekanntmachung des Hinweises auf die Patenterteilung: **09.12.2020**
(21) Anmeldenummer: 14789769.8
(22) Anmeldetag: 06.10.2014
(51) Int. Cl.: B23K 35/30, B23K 35/00, B23K 103/16, B23K 103/00, B23K 1/19, B23K 35/24, B23K 1/00, B23K 1/008

(54) **VERFAHREN ZUR HERSTELLUNG EINER METALL-KERAMIKLÖTVERBINDUNG**
METHOD FOR PRODUCING A METAL-CERAMIC SOLDERED CONNECTION
PROCÉDÉ DE PRODUCTION D'UNE LIAISON PAR BRASAGE MÉTAL-CÉRAMIQUE

(30) Priorität: 08.10.2013 CH 17172013
(43) Veröffentlichungstag der Anmeldung: 17.08.2016
(73) Patentinhaber: Kistler Holding AG, 8408 Winterthur (CH)
(72) Erfinder: MASTROGIACOMO, Giovanni, CH-8037 Zürich (CH); MÄRKI, Hans Beat, CH-8483 Kollbrunn (CH)
(86) Internationale Anmeldenummer: PCT/CH2014/000144
(87) Internationale Veröffentlichungsnummer: WO 2015/051473

(56) Entgegenhaltungen:
- WO-A1-2013/047740
- DE-U1-202010 016 357
- US-A- 4 816 621
- US-A- 5 392 982
- US-A1- 2003 132 270
- US-A1- 2008 220 313
- US-B1- 7 771 838

## Beschreibung

### Technisches Gebiet

Die vorliegende Erfindung beschreibt ein Verfahren zur Herstellung einer stoffschlüssigen Metall-Keramiklötverbindung eines unbeschichteten Keramikkörpers mit einem Metallteil mit aufeinander abgestimmten Wärmeausdehnungskoeffizienten des Keramikkörpers und des Metallteils, unter Verwendung eines metallischen Lotes, sowie eine Metall-Keramiklötverbindung mit einem durch ein Lot mindestens teilweise ausgefüllten Zwischenraum zwischen einer Oberfläche eines unbeschichteten Keramikkörpers und einer Oberfläche eines Metallteils, sowie eine Verbindungsvorrichtung zur elektrisch und thermisch isolierten Verlegung von elektrischen Zuleitungen in einen Raum unter hohen Temperaturen.

### Stand der Technik

In einigen technischen Gebieten werden Keramikkörper mit Metallteilen mittels Lötverfahren verbunden. Vor allem im Bereich miniaturisierter Bauteile, wie Steckerdurchführungen für Sensoren für verschiedene Anwendungen, sind derartige Metall-Keramiklötverbindung von besonderer Bedeutung.

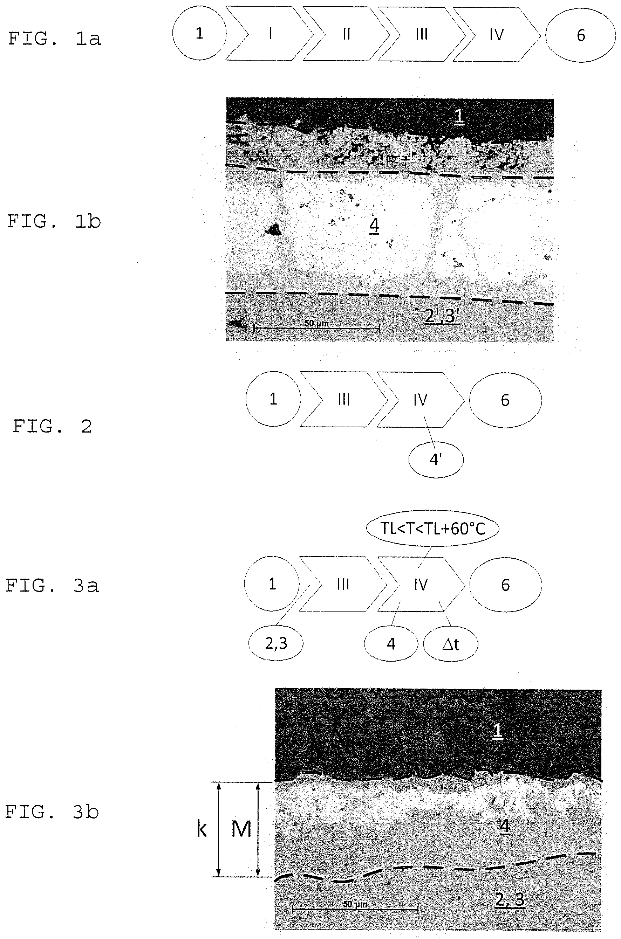

In Figur 1a sind die notwendigen Arbeitsschritte zur Herstellung einer Metall-Keramiklötverbindung gemäss Stand der Technik, beispielhaft zwischen einem Keramikkörper 1 und einem Metallteil, hier als Stahlteil ausgeführt dargestellt, wobei eine Keramikdurchführung 6 eines Hochtemperatursensors erzeugt wird.

In einem ersten Schritt I muss die vorgesehene Verbindungsstelle mittels einer Mo-/Mn-Paste in einer Schicht aufgetragen werden, zum Beispiel durch aufspritzen oder streichen und nachfolgendem Einbrennen der Paste bei ca. 1400°C unter einer reduzierenden Atmosphäre, so dass eine metallisierte Keramik resultiert.

In einem weiteren Schritt II erfolgt noch ein galvanisches Vernickeln der Metallisierung, so dass das flüssige AgCu-Lot die vernickelte Keramikoberfläche des Keramikkörpers 1 nun gleich gut benetzt, wie das zu verbindende Metallteil. Anschliessend an die, den Keramikkörper 1, vorbereitenden Schritte kann das Metallteil, hier ein Kragen und/oder ein Kontaktträger in einem Montageschritt III am oder auf dem Keramikkörper 1 positioniert werden und das Lot angebracht werden. Nach der Positionierung der Teile zueinander werden diese an der Fügestelle durch einen Lötprozessschritt IV unter hohen Temperaturen miteinander verbunden. Die Keramikoberfläche muss gemäss dem Stand der Technik beschichtet werden, was hier durch die Schritte I und II geschieht.

In Figur 1b ist in der Schnittansicht eine Lötverbindung gemäss Verfahren des Stands der Technik nach Durchlauf der Schritte I bis IV gezeigt. Wobei ein Metallteil 2', 3' mittels Lot 4 mit dem Keramikkörper 1 stoffschlüssig verbunden ist. Deutlich erkennbar ist die Beschichtung 11 der Keramikoberfläche des Keramikkörpers 1, in Form einer vernickelten Metallbeschichtung. Das verwendete einfach kommerziell erhältliche Lot 4 verbindet das Metallteil 2', 3' und die beschichtete Keramikoberfläche stoffschlüssig miteinander.

Die Beschichtung des Keramikkörpers ist zwingend notwendig und sehr aufwendig. Hier ist die Vernickelung in Schritt II zusätzlich durchgeführt, um die Benetzbarkeit der metallisierten Keramik zu verbessern.

Durch den Auftrag einer ausreichend dicken zusätzlichen Metallisierung und/oder zusätzlicher Schutzschichten, ist die Weiterverarbeitung bei kleinen Abmessungen der Keramikkörper und Metallteile schwierig und nur mit grösseren Toleranzen durchführbar.

Um die Herstellung einer Lötverbindung zwischen einer Keramikoberfläche und einem Metallteil zu vereinfachen, wurde in der DE 19734211 C2 vorgeschlagen, die Keramikoberfläche mechanisch mit einer reaktiven Komponente zu beschichten und nachfolgend mit dem Metallteil zu verlöten. Die Beschichtung kann zum Beispiel durch reiben eines titanhaltigen Blechs oder eines Stabes auf der Keramikoberfläche erfolgen. Es ist nicht klar, ob das hier beschriebene einfache Beschichtungsverfahren ausreichend gut funktioniert. Ohne Aufbringung einer Schutzschicht setzt allerdings rasch eine Oxidation ein, weshalb die Lötverbindung möglichst unmittelbar nach Herstellung der Beschichtung geschaffen werden muss.

Aus der EP356678 ist ein Verbindungsverfahren mittels Lötprozess bekannt, welches gute Verbindungsergebnisse liefert, wobei nach einer Beschichtung und Vernickelung und anschliessender Montage ein Lötprozess stattfindet.

In US4591535 wird aufgezeigt, dass bei Verwendung eines Aktivlotes 4' mit sauerstoffaffinen Elementen, ein beschichtungsfreier bzw. nichtmetallisierter Keramikkörper mit einem Metallteil aus Stahl verbunden werden konnte. Dabei konnte auf eine vorgängige Metallisierung und Vernickelung des Keramikkörpers verzichtet werden, sodass das resultierende Verfahren gemäss Figur 2 lediglich einen Montageschritt III und den Lötprozess IV unter Verwendung des Aktivlotes 4' umfasst. Der Lötprozess IV wurde dabei bei den für Aktivlote 4' bekannten Temperaturbereich durchgeführt. Die stoffschlüssige Verbindung geschieht mittels Aktivlot: Das sauerstoffaffine Element, beispielsweise Titan, ist bereits im Lot legiert. Eine Verbindung mittels Aktivlot erfordert im Vergleich zur Verwendung von Nicht-Aktivloten eine höhere Schmelztemperatur und besondere Aufmerksamkeit im Design der zu fügenden Bauteile, weil Aktivlote nicht wie konventionelle Lote fliessen und der Kapillareffekt nicht nutzbar ist. Eine mittels Aktivlot 4' erreichte Keramik-/Metallverbindung zeigt einen Aufbau, wobei Keramikkörper, Aktivlot und Metallteil deutlich voneinander unterscheidbare Schichten bilden.

US 5392982 A1 bezieht sich auf ein Verfahren zur Keramik-Beschichtung von Metallen unter Verwendung eines aktiven Lots, welches Titan enthält.

US 7 771 838 B1, welche die Basis für den Oberbegriff der Ansprüche 1 und 8 bildet, bezieht sich auf ein Verfahren zum Löten von Titan bzw. Titanlegierungen unter Verwendung eines aktiven Lots, welches Titan enthält.

US 2003132270 A1 beschreibt ein Verfahren zum Verbinden von Metall- und Keramikteilen. Dazu wird ein Hartlot auf Basis von Ag-CuO, Ag-V₂O₃ oder Pt-Nb₂O₅ bereitgestellt. Als Metall wird ein Aluminiumoxid bildendes Edelstahl verwendet.

In einer elektrischen Durchführung der WO 2013047740 A1 sind elektrische Leiter mit einem Keramikkörper verlötet. Die elektrischen Leiter bestehen grösstenteils aus Titan, das Lot besteht grösstenteils aus Gold. Der Lötvorgang wird durch einen Infrarotstrahler bewerkstelligt. Die Lötdauer ist kürzer als zwei Minuten.

Bei einem Sensor gemäss DE 202010016357 U1 ist ein Sensorelement in einem Keramikkörper angeordnet, welches über einen metallischen Kontakt kontaktierbar ist, der mittels Lötverbindung hergestellt ist. Das verwendete Lot ist ein Aktivlot.

Bei einem Drucksensor gemäss DE 102010003145 A1 ist eine Messmembran mittels Aktivhartlot, einer Zr/Ni/Ti-Legierung druckdicht verbunden. Ein zweites Aktivhartlot verbindet einen Primärsignalpfad von einem Wandler der Messmembran mit einer Messelektronik.

Auch die US 4816621 A1 bezieht sich auf eine Metall-KeramikDurchführung mit Metallelektroden, welche mit einer Keramikscheibe verlötet sind. Die Metallelektroden weisen Platin, Niob und Titan auf. Das Lot ist aus Gold.

US 2008220313 A1 ist auf eine Abdichtung einer Brennstoffzelle gerichtet. Zwei metallische Gehäuseteil der Brennstoffzelle sind mit zur elektrischen Isolation Keramik beschichtet. Die Keramikbeschichtungen sind miteinander verlötet. Das Lot ist ein Lötfolie auf Basis von Silber und Kupfer.

Aktivlote sind nicht einfach kommerziell erhältlich und müssen meist von Spezialzulieferern für vergleichsweise hohe Kosten beschafft werden. Da Aktivlote im Vergleich zu den Nicht-Aktivloten einen höheren Schmelzpunkt bzw. höhere Prozessierungstemperaturen aufweisen, nehmen thermische Spannungen im Keramikkörper zu, woraus eine stärkere Rissneigung resultiert. Dies liegt daran, dass sich die Wärmeausdehnungskoeffizienten von Metall und Keramik unterscheiden. Wenn die beiden Komponenten bei einer hohen Temperatur miteinander verbunden werden, bilden sich zwangsläufig Spannungen, nachdem sie wieder Zimmertemperatur erreicht haben. Um die hohen Löttemperaturen der Aktivlote zu erreichen ist zwangsläufig auch ein hoher Energieverbrauch notwendig.

Da bei der Verwendung von Aktivloten ohne Beschichtung des Keramikkörpers der Kapillarspalt zwischen Keramikoberfläche und Metallteiloberfläche aus Stahl nicht vollständig mit Aktivlot gefüllt wird, weisen die Lötverbindungen die Form von Kehlnähten auf, was beispielsweise für Durchführungen wie hier beschrieben, nachteilig ist. Für Kapillarlötungen sind Aktivlote ungeeignet, da die Aktivkomponente bereits vor einer vollständigen Eindringung des Lots in die Kapillare verbraucht sein kann und dadurch der Spalt zwischen Keramikkörper und Metallteil nicht vollständig stoffschlüssig verbindbar ist. Zur Herstellung von Metall-Keramiklötverbindung gemäss Stand der Technik, bei der eine vorgängige Metallisierung und Vernickelung durchgeführt wird, ist in der Regel mit einer Kapillarlötspaltbreite von 0.05 mm zu rechnen, da die Schichtdicke variieren kann.

### Darstellung der Erfindung

Die vorliegende Erfindung hat sich zur Aufgabe gestellt, ein Verfahren zur Herstellung einer stoffschlüssigen Metall-Keramiklötverbindung eines unbeschichteten Keramikkörpers mit einem Metallteil mit aufeinander abgestimmten Wärmeausdehnungskoeffizienten des Keramikkörpers und des Metallteils zu schaffen, wobei auf die Verwendung schwer zu beschaffender und kostspieliger Aktivlote, sowie spezieller vorgängiger Beschichtung des Keramikkörpers verzichtet werden soll. Die zu lösende Aufgabe umfasst das Erzielen einer Metall-Keramiklötverbindung mit möglichst wenig Aufwand bei geringen Kosten. Zudem soll die Verbindung hohen Ansprüchen genügen und insbesondere nicht spröde oder brüchig sein.

Mit dem erfindungsgemässen Verfahren kann der kapillare Lotfluss ähnlich gut wie bei einer vorgängigen Metallisierung gesteuert werden, was eine hohe mechanische Belastbarkeit der herzustellenden Metall-Keramikverbindungen ergibt, wobei die Metall-Keramikverbindungen insbesondere auch höheren Scherbelastungen standhalten.

Eine Teilaufgabe der Erfindung besteht darin, eine Keramikdurchführung für mindestens einen Hochtemperatursensor, geeignet für eine Einsatztemperatur grösser 200°C mit einer derartigen Metall-Keramikverbindung zu schaffen.

Die Erfindung betrifft weiterhin eine nach dem erfindungsgemässen Verfahren hergestellte Metall-Keramiklötverbindung zwischen einem Keramikkörper und einem Metallteil.

Die Aufgabe wird durch ein Verfahren gelöst, welches durch die Merkmale des Hauptanspruchs beschrieben ist.

Der Vorteil an diesem erfindungsgemässen Verfahren besteht darin, dass eine tiefere Löttemperatur eingerichtet werden kann, weil das inaktive Lot kein Titan enthält. Die tiefere Löttemperatur führt dazu, dass das fertige Teil weniger Spannungen aufweist, nachdem es auf Raumtemperatur abgekühlt wird.

Zudem hat sich gezeigt, dass titanhaltige Lote meist zu viel Titan enthalten, wodurch die Verbindungen spröde werden. Im vorliegenden Fall nimmt sich die Verbindung genau so viel Titan oder andere sauerstoffaffine Elemente aus dem Metall, wie es für die Verbindung braucht, und nicht mehr. Dadurch wird die Verbindung sehr hochwertig.

Zudem ist mit dem beschriebenen Verfahren eine Kapillarlötung möglich, was mit einem titanhaltigen Lot wie beispielsweise in der US 7771838 nicht möglich ist.

Insbesondere wird die Verbindung unter sauerstofffreiem Schutzgas oder Vakuum hergestellt, damit keine Oxidation stattfindet. Bei herkömmlichen Verfahren wird, beispielsweise bei einem kupferhaltigen Metall, eine Oxidschicht gebildet, welche beim Directbonding als Lot verwendet wird, wie beispielsweise in der EP 2263820.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt schematisch ein Verfahren zur Herstellung einer Metall-Keramiklötverbindung, mittels welchem ein mindestens teilweise metallisierter Keramikkörper mittels handelsüblichem Lot an einem Metallteil gemäss Stand der Technik befestigt wird, während
- Figur 1b: eine Mikroskopaufnahme einer Schnittansicht einer Metall-Keramiklötverbindung hergestellt mit dem Verfahren gemäss Figur 1a zeigt.
- Figur 2: zeigt schematisch einen Lötvorgang gemäss dem Stand der Technik unter Verwendung eines Aktivlots, wobei auf eine Metallisierung verzichtet worden ist.
- Figur 3a: zeigt das Schema des erfindungsgemässen Verfahrens zur Herstellung einer Metall-Keramiklötverbindung, während
- Figur 3b: ein Mikroskopbild eines Schnitts einer MetallKeramiklötverbindung hergestellt mit dem erfindungsgemässen Verfahren zeigt.
- Figur 4a: zeigt eine Schnittansicht der Anordnung eines Keramikkörpers relativ zu einem Metallteil vor dem Aufschmelzen des Lots, während
- Figur 4b: eine Schnittansicht des Keramikkörpers und des Metallteils nach dem Lötprozess zeigt, wobei das Resultat eine Keramikdurchführung eines Hochtemperatursensors ist.
- Figuren 5a, 5b: zeigen die Keramikdurchführung gemäss Figuren 4 mit zusätzlich eingelöteter Scheibe, vor und nach dem Lötprozess in einer Schnittansicht.
- Figur 6: zeigt einen Hochtemperatursensor mit eingebauter Keramikdurchführung.

### Wege zur Ausführung der Erfindung

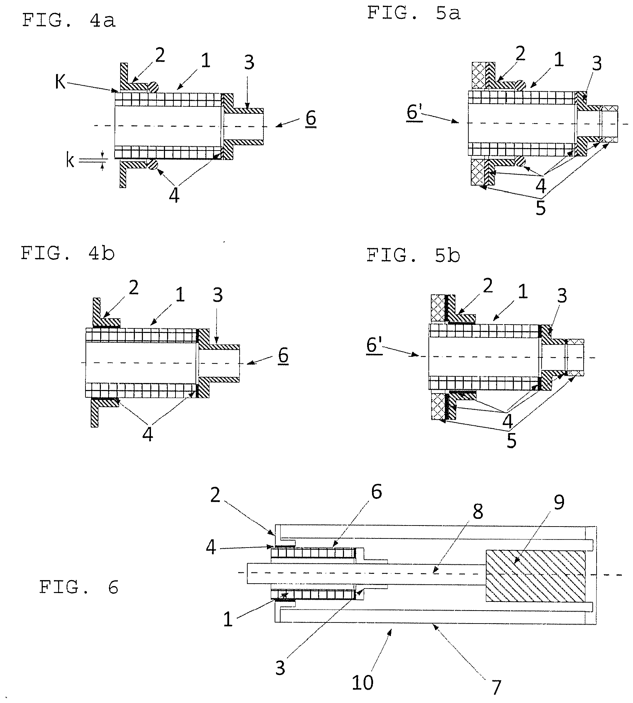

Das im Folgenden beschriebene erfindungsgemässe Verfahren zur Herstellung einer stoffschlüssigen Metall-Keramiklötverbindung wird anhand einer Keramikdurchführung 6 beschrieben, wie in den Figuren 4-6 dargestellt, welche durch eine stoffschlüssige Verbindung eines unbeschichteten Keramikkörpers 1 mit einem Metallteil 2, 3 erzeugt wird. Die Wärmeausdehnungskoeffizienten des Keramikkörpers 1 und des Metallteils 2, 3 sind aufeinander abgestimmt gewählt, also ähnlich zueinander. Der Keramikkörper 1 soll zu mindestens 80% Aluminiumdioxid (Saphir), Siliziumoxid, Zirkonoxid oder eine Mischung davon bestehen. Erfindungsgemäss ist er unbeschichtet und weist entsprechend keine metallisierte und vernickelte Keramikkörperoberfläche auf. Dies erspart einen Arbeitsschritt im erfindungsgemässen Verfahren gegenüber ähnlicher Verfahren gemäss dem Stand der Technik.

Als Lot 4 werden konventionelle und kostengünstigere metallische Nichtaktivlote verwendet. Wichtig ist, dass die verwendeten Lote 4 eutektisch oder naheutektisch sind. Insbesondere werden Lote in Form von silber- oder goldbasierten Loten, beispielsweise AgCu, AgCuPd oder AuNi oder dergleichen bevorzugt. Die Solidustemperatur und die Liquidustemperatur TL sollen entweder gleich sein, womit das Lot 4 eutektisch ist, oder beide Temperaturen sollen sich um weniger als 5K unterscheiden, was als naheutektisch bezeichnet wird. Des Weiteren sollten die verwendeten Lote 4 vorzugsweise niederschmelzende Lote 4 sein mit Liquidustemperaturen TL< 1000°C, damit die thermische Belastung der Bauteile während des Lötprozesses IV gering bleibt. Sie können insbesondere in Form einer Folie oder eines Drahts vorliegen. Bei einer niedrigen Herstelltemperatur reduziert sich die Gefahr einer Verspannung zwischen Metallteil 2, 3 und Keramikkörper 1, da diese, wenn auch ähnliche, so dennoch ungleiche Wärmeausdehnungskoeffizienten aufweisen.

Die zu verbindenden Metallteile 2, 3 müssen mindestens einen Anteil von 50% eines sauerstoffaffinen Elementes aufweisen, damit diese mit dem hier vorgestellten Verfahren mit dem Keramikkörper stoffschlüssig verbunden werden können. Bevorzugt werden die Metallteile 2, 3 aus Titan, Hafnium oder Zirkonium oder Legierungen dieser Elemente gewählt.

In einem Montageschritt III wird das zu verbindende Metallteil 2, 3 an oder auf der Keramikkörperoberfläche des unbeschichteten Keramikkörpers 1 positioniert und zueinander ausgerichtet gehalten, wobei ein Zwischenraum bzw. ein Kapillarspalt zwischen der Oberfläche des Keramikkörpers 1 und einer dem Keramikkörper 1 zugewandten Oberfläche des Metallteils 2, 3 gebildet wird. Dazu kann eine Haltevorrichtung verwendet werden. Anschliessend oder gleichzeitig zur Positionierung zueinander wird das Lot 4 im Bereich der oder in die Zwischenräume gebracht, die als Kapillarspalte ausgestaltet sein können, und so mit dem Keramikkörper 2 und dem Metallteil 2, 3 in Kontakt gebracht.

Das Lot 4 kann dabei beispielsweise in Form von drahtförmigem Lot 4 oder von einer Lotfolie 4 aufweisen. Die Lotfolie 4 wird vorzugsweise in den Zwischenraum eingelegt und kann diese auch ausfüllen.

Nach Transport des Aufbaus, umfassend den Keramikkörper 1, das Metallteil 2, 3 sowie das 4, findet in einem Ofen der Lötprozess IV bei einer Löttemperatur T unter Vakuum oder einer Schutzgasatmosphäre statt. Wichtig ist, dass der Aufbau in eine sauerstofffreie Umgebung gebracht wird, damit keine Oxidation stattfinden kann. Da das Verfahren sensibel auf die eingestellte Löttemperatur T ist, auf die der Aufbau im Ofen gebracht wird, muss diese genau einstellbar sein und für eine Lötdauer Δt konstant gehalten werden.

Versuche haben gezeigt, dass bereits eine Löttemperatur T, welche wenige Grade über 780°C liegt, beispielsweise 3-5°C höher, bei Verwendung von silberbasiertem Lot 4 für eine Lötdauer Δt von fünf bis zehn Minuten zu guten Ergebnissen führt. Wichtig ist aber, dass die Löttemperatur T grösser als sie Liquidustemperatur TL des gewählten Lotes 4 und kleiner gleich der Liquidustemperatur plus 60°C des gewählten Lotes 4 während der Lötdauer Δt gewählt ist. Damit muss die Löttemperatur T zwischen TL < T ≤ TL+60°C gewählt werden.

Anschliessend an den Lötprozess kühlen die miteinander verbundenen Bauteile, namentlich der Keramikkörper 1 und das Metallteil 2, 3, ab, wodurch im Zwischenraum zwischen diesen Bauteilen eine stoffschlüssige Verbindung entsteht.

Aus dem bisher bekannten Stand der Technik war die Schaffung einer Metall-Keramiklötverbindung zwischen einem unbeschichteten Keramikkörper und einem Metallteil 2, 3 nur bei Verwendung von speziellen Aktivloten möglich. Erfindungsgemäss wird beim hier beschriebenen Verfahren kein Aktivlot verwendet, sondern ein konventionelles Nichtaktivlot 4. Entscheidend ist zum einen die Verwendung eines Metallteils 2, 3, welches mindestens einen Anteil von 50% eines sauerstoffaffinen Elementes aufweist, und die Einstellung der Löttemperatur T in einem kleinen definierten Temperaturbereich zwischen TL < T ≤ TL+60°C.

Bei dem Lötprozess IV schmilzt das Lot 4 und benetzt die Metalloberfläche des Metallteils 2, 3. Ausserdem wird ein Anteil des Metallteils 2, 3 gelöst und Bestandteile des sauerstoffaffinen Elementes des Metallteils 2, 3 gehen in das Lot 4 über und lösen sich darin. Es entsteht ein Mischphasenbereich,M, in welchem das Nichtaktivlot 4 mit dem sauerstoffaffinem Element aus dem Metallteil 2, 3 gemischt ist. Durch die Verwendung von Metallteilen 2, 3 mit einem Anteil von mindestens 50% eines sauerstoffaffinen Elementes erfolgt während des Lötprozesses IV eine stete Nachlieferung einer aktiven Komponente zum Nichtaktivlot 4, und zwar in der genauen Menge des Bedarfs, da die sauerstoffaffinen Elemente in unbegrenzter Menge zur Verfügung stehen. Damit wird hier während des Lötprozesses IV ein Nichtaktivlot 4 durch die Abgabe des sauerstoffaffinen Elementes aus dem Metallteil 2, 3 aktiviert. Der Keramikkörper 1 und das Metallteil 2, 3 werden entsprechend durch das Lot 4 und den Mischphasenbereich M stoffschlüssig miteinander verbunden. Insbesondere wird beim Lötprozess wird eine Dicke des Metallteils 2, 3 von grösser oder gleich 3 µm normal zur Oberfläche des Metallteils 2, 3, die dem Zwischenraum oder dem Kapillarlötspalt K zugewandt ist, vollständig gelöst und füllt zusammen mit dem Lot 4 den Zwischenraum oder Kapillarlötspalt K aus.

Wie in der Schnittansicht gemäss Figur 3b erkennbar, geht ein Bestandteil des Metallteils 2, 3 beim Lötprozess IV in das Lot 4 über, sodass ein Mischphasenbereich M aus Lot 4 und Metallteilmasse gebildet wird. Das geschmolzene Lot 4 reichert sich während des Lötprozesses mit sauerstoffaffinen Material der Metallteile 2, 3 an, wobei sich der Mischphasenbereich M aus Metall und Lot 4 zwischen Metallteil 2, 3 und dem unbeschichteten Keramikkörper 1 bildet, den Zwischenraum ausfüllt und beide Teile stoffschlüssig miteinander verbindet.

Ein Teil der Masse des Metallteils 2, 3 im Bereich der Oberfläche wird beim Lötprozess IV verbraucht und das Metallteil 2, 3 entsprechend angegriffen. Dies ist in Figur 3b zu erkennen, da diese Grenzlinie, hier gestrichelt dargestellt, nicht gradlinig verläuft. Mikroskopiebilder von Metall-Keramiklötverbindung gemäss Stand der Technik, abgebildet in Fig. 1b, zeigen hingegen Grenzflächen mit deutlich unterscheidbaren und scharf und gradlinig abgegrenzten Grenzflächen der Metallteile 2', 3' und des Keramikkörpers. Da die Fig. 3b nicht in Farbe abgebildet ist, kann die Grenze zwischen dem Metallteil 2, 3 und dem Lot 4 in dieser schwarz-weiss Abbildung nicht erkannt werden. Sie wurde daher mit der gestrichelten Linie hervorgehoben. Die Grenzlinie in Fig. 3b ist daher nicht gradlinig, weil sich ein Teil der Oberfläche mit dem Lot vermischt hat.

Da die Löttemperatur T deutlich unterhalb der Schmelztemperatur des Keramikkörpers 1 liegt, verändert sich die Oberfläche des Keramikkörpers 1 nicht. Das Lot 4, der Mischphasenbereich M und aufgeschmolzenes Metall füllen den gesamten Zwischenraum oder Kapillarlötspalt K zwischen Metallteiloberfläche und Keramikkörperoberfläche. Im Mischphasenbereich M stellt sich ein Konzentrationsgradient ein, wobei in der Nähe der Metallteile 2, 3 eine hohe Konzentration sauerstoffaffiner Elemente vorliegt, welche mit zunehmendem Abstand von den Metallteilen 2, 3 abnimmt. Die Dicke des Mischphasenbereiches M entspricht dabei dem Zwischenraum oder der Kapillarlötspaltbreite k.

Versuche haben gezeigt, dass Anteile der Oberfläche des Metallteils 2, 3 im Bereich einer Dicke von grössergleich 30 µm normal zur Oberfläche des Metallteils 2, 3, die dem Kapillarlötspalt K zugewandt ist, vollständig gelöst werden. Diese aufgelöste Stoffmenge des Metallteils 2, 3 füllt mit dem Lot 4 beim Lötprozess IV den Zwischenraum beziehungsweise den Kapillarlötspalt K aus.

In den Figuren 4 und 5 sind in Schnittansicht verschiedene Durchführungen 6, 6' mit einem unbeschichteten Keramikkörper 1 und mindestens einem Metallteil 2, 3 nach dem Montageschritt III in Figur 4a und 5a und nach dem Lötprozess IV in Figur 4b und 5b gezeigt.

In Figur 4a ist eine Durchführung 6 für einen nicht dargestellten Hochtemperatursensor, bestehend aus dem Keramikkörper 1, einem metallischen Kragen 2 und einem metallischen Kontaktträger 3, hier von einem Titanwerkstoff Grade 5 gebildet, gezeigt. Keramikkörper 1 und die Metallteile 2, 3 sind zueinander ausgerichtet gelagert, wobei die Metallteile 2, 3 voneinander elektrisch isoliert am Keramikkörper 1 befestigt werden. Zwischen den zu verlötenden Flächenabschnitten des Keramikkörpers 1 und des gegenüberliegend angeordneten Metallteils 2 ist ein Kapillarlötspalt K mit fixer Kapillarlötspaltbreite k gebildet. Der Kontaktträger 3 ist relativ zum Keramikkörper 1 derart ausgerichtet, dass ein Zwischenraum zwischen einer Oberfläche des Kontaktträgers 3 und der Oberfläche der Stirnseite des Keramikkörpers 1 gebildet ist.

Als Lot wird ein AgCu-Lot 4 verwendet, welches in Form von Drahtlot, Lotfolie oder Paste vorliegt und in die Nähe des Kapillarlötspalte K zwischen Kragen 2 und Keramikkörper 1 gebracht wird. Weiteres Lot 4 ist in den Zwischenraum zwischen der Stirnfläche des Keramikkörpers 1 und der Oberfläche des Kontaktträgers 3 in Folienform angeordnet. Das AgCu-Lot 4 umfasst einen Anteil von 72 Gew.-% Silber und 28 Gew.-% Kupfer. Da unbeschichtete Keramikkörper 1 verwendet werden, sind definierte Kapillarlötspaltbreiten k von kleiner 0.03 mm einfach und reproduzierbar erreichbar. Das Metallteil 2, 3 kann auch berührend an den Keramikkörper 1 angeordnet sein, sodass der Zwischenraum nur durch die Unebenheiten der beiden Oberflächen zustande kommt. Dies genügt, damit das Lot 4 durch die Kapillarwirkung zwischen die Oberflächen von Metallteil 2, 3 und Keramikkörper 1 fliesst und die gewünschte Verbindung herstellt. Metallteil 2, 3 und Keramikkörper 1 können demnach beispielsweise flächig aufeinander gelegt werden.

Nach dem der Montageschritt III, inklusive der Anordnung des Lotes 4 abgeschlossen ist; wird der Aufbau in einem Vakuumofen vakuumisiert und der Lötprozess IV bei einer Löttemperatur von wenig, beispielsweise 3-5°C grösser als 780°C für fünf Minuten durchgeführt. Das Ergebnis ist in Figur 4b gezeigt. Das Lot 4 hat beim Lötprozess IV den Kapillarlötspalt K vollständig gefüllt. Bestandteile des Titans der Metallteile 2, 3 sind in das Lot 4 übergegangen und haben den Mischphasenbereich M mit einer Ausdehnung grösser Null gebildet. In Versuchen zeigte sich, dass die Lötverbindung dicht ist und der Keramikkörper 1 rissfrei bleibt. Auch der Zwischenraum zwischen Kontaktträger 3 und Keramikkörper 1 ist vollständig ausgefüllt, wobei auch hier eine stoffschlüssige Verbindung erreicht ist.

Wie in den Figuren 5a und 5b gezeigt, können auch weitere Anbauteile, hier zwei Scheiben 5 aus Stahl einer Stahlgüte 1.4301 im gleichen Lötprozess IV mit den Metallteilen 2, 3 verlötet werden. Auch hier wurde das AgCu-Lot 4 verwendet und in die Nähe der Kapillarlötspalte K bzw. in den Zwischenraum zwischen Keramikkörper 1 und Kontaktträger 3 und zwischen Kontaktträger 3 und Scheibe 5 gebracht. Der Lötprozess wurde mit der gleichen Löttemperatur T in der gleichen Lötdauer Δt durchgeführt. Nach dem Lötprozess IV haben Versuche dichte und rissfreie Verbindungen gezeigt.

In Figur 6 ist ein Hochtemperatursensor 10 gezeigt, welcher ein Messelement 9 in einem Gehäuse 7 gelagert umfasst. Durch die Durchführung 6, welche auch Keramikdurchführung genannt wird, ist ein Leiter 8 von einem Gehäuse 7 elektrisch isoliert. Zuleitungen können durch den unbeschichteten Keramikkörper 1, der frei von Metallisierungsschichten und hier beispielsweise als Al₂O₃-Keramik ausgestaltet ist, das Gehäuse 7 querend bis zu einem Messelement 9 geführt werden. Der Kragen 2 mit mindestens einem Anteil von 50% eines sauerstoffaffinen Elementes, hier von Titan Grade 5, ist über eine Metall-Keramiklötverbindung und Lot 4 mit dem Keramikkörper 1 stoffschlüssig verbunden. Am Kragen 2 ist das Gehäuse 7 des hier beschriebenen Hochtemperatursensors 10 befestigt. Der Kontaktträger 3 ist auf einer Stirnfläche des Keramikkörpers 1 mittels Metall-Keramiklötverbindung verbunden. Ein derartiger Hochtemperatursensor 10 kann beispielsweise in einem Brennraum eines Verbrennungsmotors angeordnet werden, wobei eine elektrische Entkopplung der Zuleitungen des Messelementes 9 vom Brennraum und vom Gehäuse 7 des Hochtemperatursensors 10 erreicht wird. Damit kann eine verlustfreie Weiterleitung der am Messelement 9 erfassten Ladungen erreicht werden. Solche Hochtemperaturen 10 werden insbesondere im Temperaturbereich über 100°C bis 350°C eingesetzt.

Aufgrund der nicht notwendigen vorgängigen Metallisierung kann die für den Keramikkörper 1 gewählte Keramik frei von jeglichen Glasphasen sein. Dadurch können reinere Keramiken eingesetzt werden, die sich durch höhere elektrische Isolationen charakterisieren. Der Keramikkörper kann derart gewählt sein, dass er einen Glasphasenanteil von 0 bis 6 Gew.% aufweist.

Ausserdem können unbeschichtete Keramikkörper 1 umfassende Durchführungen '6 mit engeren Mass- und Formtoleranzen hergestellt werden, als es mit Verfahren des Stands der Technik möglich ist.

Metall-Keramikverbindung und derartige Verbindungen aufweisende Durchführungen, welche mit goldbasierten Loten 4 hergestellt wurden, sind auch bei Anwendungstemperaturen oberhalb von 350 °C heliumdicht, was in verschiedenen Anwendungsbereichen gewünscht ist.

Bei Verwendung von Nichtaktivloten 4 sind geringere Löttemperaturen T einstellbar, als bei Verwendung von Aktivloten. Dies ist vorteilhaft, da die beim Lötprozess IV auftretenden Spannungsbelastungen entsprechend reduziert sind.

### Bezugszeichenliste

- 1: Keramikkörper, unbeschichtet
- 2: Metallteil / Kragen (mind. 50% sauerstoffaffines Element)
- 2': Metallteil
- 3: Metallteil / Kontaktträger (mind. 50% sauerstoffaffines Element)
- 3': Metallteil
- 4: Lot (silber- oder goldbasiert) eutektisch/naheutektisch, nichtaktiv
- 4': Aktivlot
- 5: Scheibe (aus Stahl oder Nickelabsislegierung)
- 6: Durchführung/Keramikdurchführung
- 6': Durchführung/Keramikdurchführung
- 7: Gehäuse
- 8: Leiter
- 9: Messelement
- 10: Hochtemperatursensor
- 11: Metallisierung

- I: Beschichtungsschritt + Einbrennen
- II: Vernickelung
- III: Montageschritt
- IV: Lötprozess

- Δt: Lötdauer
- LT: Liquidustemperatur des Lotes
- M: Mischphasenbereich
- K: Kapillarlötspalt
- k: Kapillarlötspaltbreite

## Patentansprüche

1. Verfahren zur Herstellung einer stoffschlüssigen Metall-Keramiklötverbindung eines unbeschichteten Keramikkörpers (1) mit einem Metallteil (2, 3) mit aufeinander abgestimmten Wärmeausdehnungskoeffizienten des Keramikkörpers (1) und des Metallteils (2, 3) unter Verwendung eines metallischen Lotes (4), mit den Schritten:
- Wahl des Metallteils (2, 3), welches mindestens einen Anteil von 50% eines der sauerstoffaffinen Elemente Titan oder Zirkonium oder einer Legierung dieser Elemente aufweist,
- Wahl des Keramikkörpers (1), welcher mindestens zu 80% aus Aluminiumoxid, Zirkonoxid, Siliziumoxid oder einer Mischung daraus besteht;
**gekennzeichnet durch** die Schritte:
- Bereitstellen eines inaktiven, eutektischen oder naheutektischen Lotes (4), wobei das inaktive Lot (4) kein Titan enthält;
- Bilden eines Aufbaus mit dem Keramikkörper (1) und dem Metallteil (2, 3), wobei deren Oberflächen zueinander einen Kapillarlötspalt (K) bildenden Zwischenraum bilden, wobei das Lot in die Nähe des oder in den Kapillarlötspalt (K) gebracht ist;
- Bringen des Aufbaus in einen Ofen;
- Anbringen eines Vakuums oder einer sauerstofffreien Schutzgasatmosphäre um den Aufbau mit dem Lot (4);
- Heizen (IV) des Ofens auf eine Löttemperatur (T) grösser der Liquidustemperatur (TL) des Lotes (4);
- Halten der Löttemperatur im Ofen für eine Lötdauer (Δt), bis das Lot (4) mit einem Anteil gelösten Metallteils (2, 3) einen Mischphasenbereich (M) bildend den Kapillarlötspalt (K) vollständig ausfüllt und benetzt, wobei der Anteil gelösten Metallteils (2, 3) die sauerstoffaffinen Elemente Titan oder Zirkonium oder einer Legierung dieser Elemente aufweist, wobei der Ofen höchstens auf eine Temperatur T von 60°C über der Liquidustemperatur (TL) de Lotes (4) geheizt wird (TL < T < TL+60°C).

2. Verfahren nach Anspruch 1, wobei die Lötdauer (Δt) zwischen fünf und zehn Minuten beträgt.

3. Verfahren nach einem der vorhergehenden Ansprüche, wobei niederschmelzende Nichtaktivlote (4) mit einer Liquidustemperatur (TL) kleinergleich 1000°C verwendet werden.

4. Verfahren nach Anspruch 3, wobei ein silber- oder goldbasiertes Lot (4), insbesondere ein AgCu-Lot, ein AgCuPd-Lot oder ein AuNi-Lot verwendet wird.

5. Verfahren nach einem der vorhergehenden Ansprüche, wobei das Lot (4) in Form von Drahtlot, Lotfolie oder Paste vorliegt.

6. Verfahren nach einem der vorhergehenden Ansprüche, wobei das Metallteil (2, 3) und der Keramikkörper (1) derart positioniert werden, dass eine Kapillarlötspaltbreite (k) des Kapillarlötspalt (K) kleiner oder gleich 0.03 mm ist.

7. Verfahren nach einem der vorhergehenden Ansprüche, wobei der Keramikkörper (1) einen Glasphasenanteil von 0 bis 6 Gew.% aufweist.

8. Stoffschlüssige Metall-Keramiklötverbindung umfassend einen unbeschichteten Keramikkörper (1) und ein Metallteil (2, 3) sowie einem durch ein Lot (4) mindestens teilweise ausgefüllten, als Kapillarlötspalt (K) ausgestalteten Zwischenraum zwischen einer Oberfläche des unbeschichteten Keramikkörpers (1), der zu mindestens zu 80% aus Aluminiumoxid, Zirkonoxid, Siliziumoxid oder einer Mischung daraus besteht, und einer Oberfläche des Metallteils (2, 3), wobei das Metallteil (2, 3) einen Anteil von mindestens 50% eines der sauerstoffaffinen Elemente Titan, Zirkonium oder einer Legierung dieser Elemente umfasst; dass der Keramikkörper (1) zu mindestens zu 80% aus Aluminiumoxid, Zirkonoxid, Siliziumoxid oder einer Mischung daraus besteht; **dadurch gekennzeichnet, dass** das verwendete Lot (4) ein eutektisches oder naheutektisches, nichtaktives Lot (4) ist, wobei das verwendete nichtaktive Lot (4) kein Titan enthält; und wobei der Zwischenraum vollständig durch eine Zusammensetzung ausgefüllt ist, welche einen Mischphasenbereich (M) bildet und eine Legierung ist aus einen Anteil gelösten Metallteils (2, 3) und dem Lot (4), wobei der Anteil gelösten Metallteils (2, 3) die sauerstoffaffinen Elemente Titan oder Zirkonium oder einer Legierung dieser Elemente aufweist, wobei der Übergang vom Mischphasenbereich (M) zum Metallteil (2, 3) graduell ausgestaltet ist.

9. Verbindung nach Anspruch 8, wobei der Mischphasenbereich (M) eine Dicke aufweist, die einer Kapillarlötspaltbreite (k) des Kapillarlötspaltes (K) entspricht.

10. Verbindung nach Anspruch 8 oder 9, wobei der Mischphasenbereich (M) von einem silber- oder goldbasierten Lot (4), insbesondere ein AgCu-Lot, ein AgCuPd-Lot oder ein AuNi-Lot und dem Anteil gelösten Metallteils (2, 3) gebildet wird.

11. Verbindung nach einem der Ansprüche 8 bis 10, wobei beim Lötprozess eine Dicke des Metallteils (2, 3) von grösser oder gleich 3 µm normal zur Oberfläche des Metallteils (2, 3), die dem Kapillarlötspalt (K) zugewandt ist, vollständig gelöst wird und zusammen mit dem Lot (4) den Kapillarlötspalt (K) ausfüllt.

12. Verbindung nach einem der Ansprüche 8 bis 11, ; wobei das Keramikteil (1) mit einer Durchführung (6) ausgestaltet ist welche die elektrisch und/oder thermisch isolierte Durchführung eines Leiters (8) durch ein Gehäuse (7) erlaubt.

13. Verbindung nach Anspruch 12 umfassend ein Gehäuse (7), ein Messelement (9) und einen Leiter (8) wobei die Durchführung (6) den mit einem Messelement (9) verbunden Leiter (8) ummantelt.

14. Hochtemperatursensor umfassend eine Verbindung nach Anspruch 13.

## Claims

1. A method for producing a materially-bonded metal/ceramic soldered connection between an uncoated ceramic body (1) and a metal part (2, 3) where the coefficients of thermal expansion of the ceramic body (1) and metal part (2, 3) are matched by using a metallic solder (4), comprising the steps of:
- choosing the metal part (2, 3) to comprise at least a proportion of 50% of one of the oxygen-affine elements titanium or zirconium or of an alloy of these elements,
- choosing the ceramic body (1) to consist to at least 80% of aluminum oxide, zirconium oxide, silicon oxide or a mixture thereof;
**characterized by** the steps of:
- providing an inactive, eutectic or near-eutectic solder (4) wherein the inactive solder (4) contains no titanium;
- forming an assembly with the ceramic body (1) and the metal part (2, 3) wherein the surfaces thereof together form an intermediate space that forms a capillary soldering gap (K),
wherein the solder (4) is brought into the vicinity of or into said capillary soldering gap (K);
- transferring the structure into an oven;
- applying a vacuum or an oxygen-free protective gas atmosphere around the assembly comprising the solder (4);
- heating (IV) the oven to a soldering temperature (T) that is higher than the liquidus temperature (TL) of the solder (4);
- maintaining the soldering temperature within the oven for a soldering time (Δt) until the solder (4) completely fills and wets the capillary soldering gap (K) by forming a mixed-phase region (M) with a portion of the dissolved metal part (2, 3) wherein the portion of the dissolved metal part (2, 3) comprises the oxygen-affine elements titanium or zirconium or an alloy of these elements, wherein the oven is heated at most to a temperature T that is 60°C above the liquidus temperature (TL) of the solder (4) (TL < T < TL+60°C).

2. The method according to claim 1, wherein the soldering time (Δt) is between five and ten minutes.

3. The method according to any of the preceding claims, wherein low-melting non-active solders (4) having a liquidus temperature (TL) of less than or equal to 1000°C are used.

4. The method according to claim 3, wherein a silver or gold based solder (4), in particular an AgCu solder, an AgCuPd solder or an AuNi solder, is used.

5. The method according to any of the preceding claims, wherein the solder (4) is in the form of solder wire, solder film or solder paste.

6. The method according to any of the preceding claims, wherein the metal part (2, 3) and the ceramic body (1) are positioned with respect to one another in such a way that a capillary soldering gap width (k) of the capillary soldering gap (K) is less than or equal to 0.03 mm.

7. The method according to any of the preceding claims, wherein the ceramic body (1) comprises a glass phase fraction of 0 to 6% by weight.

8. A materially-bonded metal/ceramic soldered connection comprising an uncoated ceramic body (1) and a metal part (2, 3) and an intermediate space at least partially filled by a solder (4) that is formed as a capillary soldering gap (K) between a surface of the uncoated ceramic body (1) consisting to at least 80% of aluminum oxide, zirconium oxide, silicon oxide or a mixture thereof, and a surface of the metal part (2, 3), wherein the metal part (2, 3) comprises a proportion of at least 50% of one of the oxygen-affine elements titanium or zirconium or of an alloy of these elements, wherein the ceramic body (1) consists to at least 80% of aluminum oxide, zirconium oxide, silicon oxide or a mixture thereof, and **characterized in that** the solder (4) used is an eutectic or near eutectic, non-active solder (4) wherein the non-active solder (4) used contains no titanium, and wherein the intermediate space is completely filled by a composition that forms a mixed phase region (M) and is an alloy of a portion of the dissolved metal part (2, 3) and the solder (4), said portion of dissolved metal part (2, 3) comprising the oxygen-affine elements titanium or zirconium or an alloy of these elements, wherein the transition from the mixed-phase region (M) to the metal part (2, 3) is gradual.

9. The connection according to claim 8, wherein the mixed-phase region (M) has a thickness that corresponds to a capillary solder gap width (k) of the capillary solder gap (K).

10. The connection according to claim 8 or 9, wherein the mixed-phase region (M) is formed by a silver or gold based solder (4), in particular an AgCu solder, an AgCuPd solder or an AuNi solder, and by the portion of the dissolved metal part (2, 3).

11. The connection according to any of the claims 8 to 10, wherein in the soldering process a thickness of the metal part (2, 3) of more than or equal to 3 µm normal to the surface of the metal part (2, 3) that faces the capillary solder gap (K) is completely dissolved and fills the capillary solder gap (K) together with the solder (4).

12. The connection according to any of the claims 8 to 11, wherein the ceramic part (1) is formed with a feedthrough (6) that enables the electrically and/or thermally insulated feeding through of a conductor (8) through a housing (7).

13. The connection according to claim 12 comprising a housing (7), a measuring element (9) and a conductor (8) wherein the feedthrough (6) sheathes the conductor (8) that is connected to a measuring element (9).

14. A high-temperature sensor comprising a connection according to claim 13.

## Revendications

1. Procédé de production d'une liaison de matière par brasage métal/céramique d'un corps céramique (1) non revêtu avec une pièce métallique (2, 3), où les coefficients de dilatation thermique du corps céramique (1) et de la pièce métallique (2, 3) correspondent l'un à l'autre, en utilisant une brasure métallique (4), comprenant les étapes suivantes:
- sélection de la pièce métallique (2, 3) présentant au moins une fraction de 50% de l'un des éléments suivants à affinité pour l'oxygène: du titane ou du zirconium, ou d'un alliage de ces éléments;
- sélection du corps céramique (1) consistant d'au moins 80% d'oxyde d'aluminium, d'oxyde de zirconium, d'oxyde de silicium ou d'un mélange de ceux-ci;
**caractérisé par** les étapes suivantes:
- fourniture d'une brasure (4) inactive, eutectique ou quasi eutectique, ladite brasure inactive (4) ne contenant pas de titane;
- formation d'un assemblage avec le corps céramique (1) et la pièce métallique (2, 3), dans lequel leurs surfaces forment ensemble un espace intermédiaire qui forme un espace de brasage capillaire (K), la brasure étant appliquée au voisinage de ou dans ledit espace de brasage capillaire (K);
- introduction de l'assemblage dans un four;
- application d'un vide ou d'une atmosphère de gaz protecteur sans oxygène autour de l'ensemble comprenant la brasure (4);
- chauffage (IV) du four à une température de brasage (T) supérieure à la température du liquidus (TL) de la brasure (4);
- maintien de la température de brasage (T) pendant une temps de brasage (Δt) jusqu'à ce que la brasure (4) remplisse complètement et mouille l'espace de brasage capillaire (K) en formant une zone de phase mixte (M) avec une partie dissoute de la pièce métallique (2, 3), ladite partie dissoute de la pièce métallique (2, 3) comprenant les éléments à affinité pour l'oxygène, le titane ou le zirconium, ou un alliage de ces éléments, dans lequel le four est chauffé au plus à une température T qui est de 60°C au-dessus de la température de liquidus (TL) de la brasure (4) (TL < T < TL+60°C).

2. Procédé selon la revendication 1, dans lequel le temps de brasage (Δt) est compris entre cinq et dix minutes.

3. Procédé selon l'une quelconque des revendications précédentes, dans lequel des brasures (4) non actives à bas point de fusion ayant une température de liquidus (TL) inférieure ou égale à 1000°C sont utilisées.

4. Procédé selon la revendication 3, dans lequel on utilise une brasure (4) à base d'argent ou d'or, en particulier une brasure AgCu, une brasure AgCuPd ou une brasure AuNi.

5. Procédé selon l'une quelconque des revendications précédentes, dans lequel la brasure (4) se présente sous forme d'un fil de brasage, d'un film de brasage ou d'une pâte de brasage.

6. Procédé selon l'une quelconque des revendications précédentes, dans lequel la pièce métallique (2, 3) et le corps céramique (1) sont positionnés l'un par rapport à l'autre de telle sorte qu'une largeur de l'espace de brasage capillaire (k) de l'espace de brasage capillaire (K) est inférieur ou égal à 0,03 mm.

7. Procédé selon l'une quelconque des revendications précédentes, dans lequel le corps céramique (1) comprend une fraction de phase vitreuse allant de 0 à 6% en poids.

8. Liaison de matière par brasage métal/céramique comprenant un corps céramique (1) non revêtu et une pièce métallique (2, 3) ainsi qu'un espace intermédiaire au moins partiellement rempli par une brasure (4) formé en tant qu'un espace de brasage capillaire (K) entre une surface du corps céramique (1) non revêtu qui est constitué d'au moins 80% d'oxyde d'aluminium, d'oxyde de zirconium, d'oxyde de silicium ou d'un mélange de ceux-ci, et une surface de la pièce métallique (2, 3), dans laquelle la pièce métallique (2, 3) comprend une fraction d'au moins 50% de l'un des éléments suivants à affinité pour l'oxygène: du titane ou du zirconium, ou d'un alliage de ces éléments, le corps céramique (1) étant constitué d'au moins 80% d'oxyde d'aluminium, oxyde de zirconium, oxyde de silicium ou un mélange de ceux-ci, **caractérisée en ce que** la brasure (4) utilisée est une brasure (4) eutectique ou quasi eutectique, non active, dans laquelle la brasure (4) non active utilisée ne contient pas de titane, et dans laquelle l'espace intermédiaire est complètement rempli par une composition qui forme une zone de phase mixte (M) et est un alliage d'une partie dissoute de la pièce métallique (2, 3) et de la brasure (4), ladite partie dissoute de la pièce métallique (2, 3) comprenant les éléments à affinité pour l'oxygène titane ou zirconium ou un alliage de ces éléments, dans laquelle la transition de la zone de phase mixte (M) à la pièce métallique (2, 3) est graduelle.

9. Liaison selon la revendication 8, dans laquelle la zone de phase mixte (M) a une épaisseur correspondant à une largeur de l'espace de brasage capillaire (k) de l'espace de brasage capillaire (K).

10. Liaison selon la revendication 8 ou 9, dans laquelle la zone de phase mixte (M) est formée par une brasure (4) à base d'argent ou d'or, en particulier une brasure AgCu, une brasure AgCuPd ou une brasure AuNi, et par la partie dissoute de la pièce métallique (2, 3).

11. Liaison selon l'une quelconque des revendications 8 à 10, dans laquelle lors du procédé de brasage une épaisseur de la pièce métallique (2, 3) supérieure ou égale à 3 µm en direction normale à la surface de la pièce métallique (2, 3) qui fait face à l'espace de brasage capillaire (K) est complètement dissoute et remplit l'espace de brasage capillaire (K) avec la brasure (4).

12. Liaison selon l'une quelconque des revendications 8 à 11, dans laquelle la pièce céramique (1) est formée avec une traversée (6) qui permet le passage électriquement et/ou thermiquement isolé d'un conducteur (8) à travers un boîtier (7).

13. Liaison selon la revendication 12 comprenant un boîtier (7), un élément de mesure (9) et un conducteur (8) dans laquelle la traversée (6) enveloppe le conducteur (8) qui est connecté à un élément de mesure (9).

14. Capteur haute température comprenant une liaison selon la revendication 13.
